(19) Europäisches Patentamt / European Patent Office / Office européen des brevets

(11) **EP 4 365 834 B1**

(12) **EUROPEAN PATENT SPECIFICATION**

(45) Date of publication and mention
of the grant of the patent:
**03.09.2025 Bulletin 2025/36**

(21) Application number: **23185245.0**

(22) Date of filing: **13.07.2023**

(51) International Patent Classification (IPC):
**G06T 7/00** (2017.01)

(52) Cooperative Patent Classification (CPC):
**G06T 7/001;** G06T 2207/20081; G06T 2207/20084

(54) **METHOD AND DEVICE WITH DEFECT DETECTION**

VERFAHREN UND VORRICHTUNG MIT FEHLERERKENNUNG

PROCÉDÉ ET DISPOSITIF DE DÉTECTION DE DÉFAUT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.11.2022 KR 20220146416**

(43) Date of publication of application:
**08.05.2024 Bulletin 2024/19**

(73) Proprietor: **Samsung Electronics Co., Ltd.**
**Suwon-si, Gyeonggi-do 16677 (KR)**

(72) Inventors:
• **KIM, Byungjai**
16678 Suwon-si (KR)
• **KIM, Youngdong**
16678 Suwon-si (KR)
• **LIM, Jongin**
16678 Suwon-si (KR)
• **HAN, Seungju**
16678 Suwon-si (KR)

(74) Representative: **Arnold & Siedsma**
**Bezuidenhoutseweg 57**
**2594 AC The Hague (NL)**

(56) References cited:
**CN-A- 113 034 476    US-A1- 2020 134 800**

• **ZHENG YE ET AL: "Defect detection on new samples with siamese defect-aware attention network", APPLIED INTELLIGENCE., vol. 53, no. 4, 11 June 2022 (2022-06-11), NL, pages 4563 - 4578, XP093142105, ISSN: 0924-669X, Retrieved from the Internet <URL:https://link.springer.com/article/10.1007/s10489-022-03595-0/fulltext.html> DOI: 10.1007/s10489-022-03595-0**
• **HIROSHI FUKUI ET AL: "Attention Branch Network: Learning of Attention Mechanism for Visual Explanation", ARXIV.ORG, CORNELL UNIVERSITY LIBRARY, 201 OLIN LIBRARY CORNELL UNIVERSITY ITHACA, NY 14853, 25 December 2018 (2018-12-25), XP081200349**

## Description

BACKGROUND

1. Field

The following disclosure relates to a method and apparatus with defect detection.

2. Description of Related Art

In industrial production environments, detecting a fault (e.g., a defect) in a product is significant for reliable product production. A typical approach for detecting a defect in a product may include using an image (or a video) of the product. In addition, the production process and facility abnormalities may also be monitored in real time through images that capture a product's state or a state of the various manufacturing processes.

CN113034476A discloses a leather flaw detection method, a system, a storage medium and computer equipment. A triple network is used for quickly filtering out images without flaws, so that the processing efficiency can be improved, the detection cost can be saved, and the method is more suitable for the practical operation condition. Zheng Ye et al. ("Defect detection on new samples with Siamese detect-aware attention network", 11 June 2022, doi: 10.1007/s10489-022-03595-0) discloses a siamese defect-aware attention network (SDANet) with a template comparison detection strategy that improves the defect detection technique for matching new samples without rapidly collecting new data and retraining the model.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect here is provided an apparatus according to claim 8. The apparatus includes a processor configured to execute a plurality of instructions and a memory storing the plurality of instructions, wherein execution of the plurality of instructions configures the processor to output a defect prediction score of an input image through the use of a neural network provided reference image, the input image, and an enhanced image, and the neural network includes an attention map modulator configured to adaptively adjust an intensity of an attention map generated during the use of the neural network.

The processor is further configured to generate the enhanced image based on the input image and the reference image, in which a defective area is emphasized.

The generating of the enhanced image further may include obtaining a differential image based on the input image and the reference image and outputting the enhanced image by adjusting an intensity of a defective area included in the differential image.

The neural network further includes a feature extractor configured to receive the reference image and the input image and extract a feature map and an attention modulator configured to receive the feature map and the enhanced image and output a modulated feature map.

The attention modulator may operate as reflecting that the attention modulator was trained to increase weights of defect-associated values included in the feature map.

The attention modulator may include an attention map generator configured to receive the enhanced image and output a modulated attention map. The attention modulator includes a feature modulator configured to receive the modulated attention map and the feature map and output the modulated feature map.

The attention map generator includes a generator configured to receive the enhanced image and output the attention map. The attention map modulator may be further configured to receive the attention map and output the modulated attention map, and the modulated attention map may be obtained by adaptively adjusting an intensity of the attention map.

The feature modulator may be configured to output the modulated feature map by applying the modulated attention map to the feature map.

The feature modulator is configured to apply the modulated attention map to a portion of the feature map and output the modulated feature map by concatenating a result of applying the modulated attention map and a remaining portion of the feature map excluding the portion.

The feature modulator may be configured to perform an elementwise operation on at least a portion of the feature map and the modulated attention map.

The neural network further may include a defect classifier configured to receive the modulated feature map and output the defect prediction score of the input image.

In a general aspect there is provided a processor-implemented method according to claim 1. The method includes generating a defect prediction score of an input image through the use of a neural network provided reference image, the input image, and an enhanced image, the neural network including an attention map modulator configured to adaptively adjust an intensity of an attention map generated during the use of the neural network.

The method includes generating the enhanced image based on the input image and the reference image, in which a defective area is emphasized.

The generating of the of the enhanced image further may include obtaining a differential image based on the input image and the reference image and outputting the enhanced image by adjusting an intensity of a defective area included in the differential image.

The neural network further includes a feature extractor configured to receive the reference image and the input image and extract a feature map and an attention modulator configured to receive the feature map and the enhanced image and output a modulated feature map.

The attention modulator may operate as reflecting that the attention modulator was trained to increase weights of defect-associated values included in the feature map.

The attention modulator may include an attention map generator configured to receive the enhanced image and output a modulated attention map. The attention modulator includes a feature modulator configured to receive the modulated attention map and the feature map and output the modulated feature map.

The attention map generator includes a generator configured to receive the enhanced image and output the attention map. The attention map modulator may further be configured to receive the attention map and output the modulated attention map, the modulated attention map may be obtained by adaptively adjusting an intensity of the attention map.

The feature modulator may be configured to output the modulated feature map by applying the modulated attention map to the feature map.

The feature modulator may be configured to apply the modulated attention map to a portion of the feature map and output the modulated feature map by concatenating a result of applying the modulated attention map and a remaining portion of the feature map excluding the portion.

In an example, here is provided a processor-implemented method, the method including comparing an input image to a reference image to determine a defective area on an object, emphasizing the defective area to generate an enhanced image of the input image, and implementing at least a portion of a neural network based on an attention map generated based on the enhanced image, the reference image, and the input image.

The neural network may adaptively adjust attention map intensities corresponding to the defective area in the generating of the attention map.

The method may include generating, by the neural network, a defect prediction score for the input image indicating a likelihood of whether the input image contains a defect within the determined defective area.

Other features and aspects will be apparent from the following detailed description, the drawings, and the claims.

BRIEF DESCRIPTION OF THE DRAWINGS

FIGS. 1A and 1B illustrate examples of typical defect inspection approaches.
FIG. 2 illustrates an example of an electronic device according to one or more embodiments.
FIG. 3 illustrates an example of a defect inspection method based on a neural network according to one or more embodiments.
FIG. 4 illustrates examples of a configuration and an operation of a feature modulator shown in FIG. 3 according to one or more embodiments.
FIG. 5 illustrates an example of a defect inspection method according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C', and the like are intended to have disjunctive meanings, and these phrases "at least one of A, B, and C", "at least one of A, B, or C', and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

As used in connection with various example embodiments of the disclosure, any use of the terms "module" or "unit" means processing hardware, e.g., configured to implement software and/or firmware to configure such processing hardware to perform corresponding operations, and may interchangeably be used with other terms, for example, "logic," "logic block," "part," or "circuitry". As one non-limiting example, an application-predetermined integrated circuit (ASIC) may be referred to as an application-predetermined integrated module. As another non-limiting example, a field-programmable gate array (FPGA) or an application-specific integrated circuit (ASIC) may be respectively referred to as a field-programmable gate unit or an application-specific integrated unit. In a non-limiting example, such software may include components such as software components, object-oriented software components, class components, and may include processor task components, processes, functions, attributes, procedures, subroutines, segments of the software. Software may further include program code, drivers, firmware, microcode, circuits, data, database, data structures, tables, arrays, and variables. In another non-limiting example, such software may be executed by one or more central processing units (CPUs) of an electronic device or secure multimedia card.

Due to manufacturing techniques and/or tolerances, variations of the shapes shown in the drawings may occur. Thus, the examples described herein are not limited to the specific shapes shown in the drawings, but include changes in shape that occur during manufacturing.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

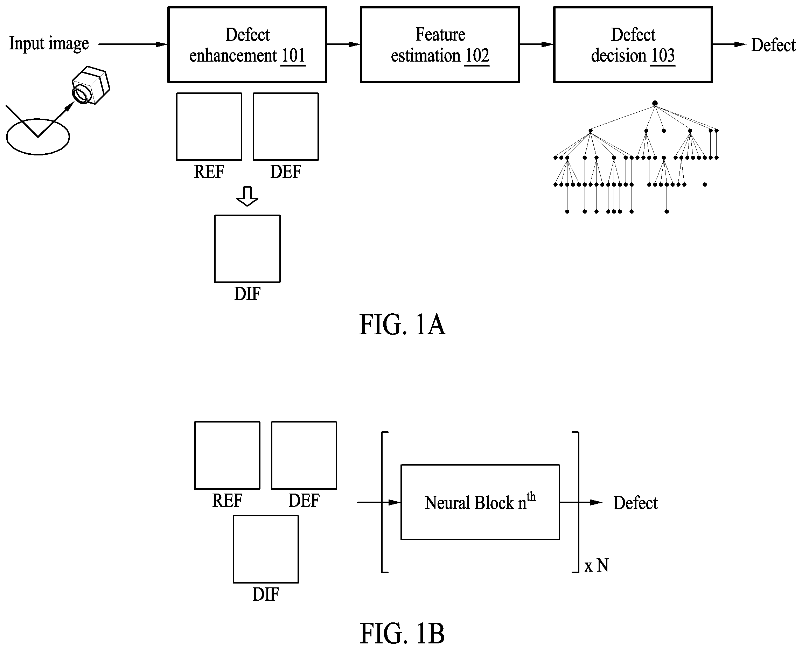

FIGS. 1A and 1B illustrate examples of typical defect inspection approaches.

Referring to FIG. 1A, a first typical defect detection algorithm may include three operations. In operation 101, an input image (e.g., a video of a potentially defective product) that may include defect-related information may be acquired by capturing an image of a product to be inspected (e.g., a product subject to defect detection). In an example, some or all aspects of the input image may be enhanced. In operation 101, a differential image (e.g., a differential video) may be obtained from an image of a normal product (e.g., a reference video) and an image of the product to be inspected (e.g., a video of the defect), and defect-related information included in the differential image may be enhanced. In operation 102, features for each image may be estimated based on the image of the normal product, the image of the product to be inspected, and the differential image. The feature estimation operation may be performed by organic combination with human interaction, such as in process where the product image is also observed by a human. In operation 103, it may be determined whether the product to be inspected is defective. In operation 103, a decision tree may be constructed based on the features (e.g., the features estimated in operation 102), and a product having one or more features corresponding to a preset defect condition may be determined to be defective.

Referring to FIG. 1B, in another typical defect detection example, operations 102 and 103 described above with reference to FIG. 1A may be replaced by a neural network. The image of the normal product (e.g., the reference video), the image of the product to be inspected (e.g., the video of the defect), and the differential image (e.g., the differential video) may be input into the neural network, to determine whether the product to be inspected is defective.

In an example of a method of industrial fault detection there may be instances where changes in the defect observation environment may occur. In addition, in some instances, there may be times where a fault detection employing a neural network takes place within a suboptimal scenario where there is a small amount of training data. In a non-limiting example, one or more embodiments of an image processing system implementing an industrial fault detection system may be stable in a defect observation environment where changes occur, including noise, distortion, and interference, as well as other external factors that may occur. In a non-limiting example, one or more embodiments of an image processing system implementing an industrial fault detection system may overcome suboptimal scenarios in which there is a small amount of training data available.

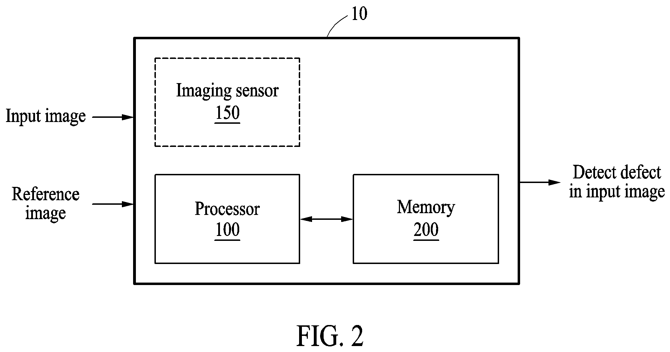

FIG. 2 illustrates an example of an electronic device according to one or more embodiments.

A typical inspection approach that is based on a human interaction, such as the approach of FIG. 1A, may be inferior to the performance of features based on the use of an artificial intelligence model, e.g., machine learning. In the following examples, which will be described below with reference to FIGS. 2 to 5, features based on a use of a machine learning model may be used to inspect for and detect defects in products.

In the example described with reference to FIG. 1B, a typical neural network is used, but the characteristics of an input image for defect detection are not considered. The differential image used in the example of FIG. 1B is obtained by enhancing defect-related information, and the typical neural network may depend on the differential image. In the example of FIG. 1B, when the characteristics of the differential image change, an overfitting issue may arise, resulting in a decrease in a detection accuracy of the typical detection approach using the typical neural network. The following examples, which will be described below in greater detail in FIGS. 2 to 5, may use an attention mechanism in a machine learning model, which may improve generalization performance even in a suboptimal scenario, or other examples, where there is a small amount of training data for the machine learning model that may be employed, and may also maintain a predetermined detection accuracy.

Referring to FIG. 2, in a defect observation environment(e.g., an environment for observing defects), an electronic device 10 may obtain a reliable defect detection result by utilizing an enhanced image in which an intensity of a signal related to a defect is adjusted based on factors within a defect observation environment, as a non-limiting example. In an example, the electronic device 10 may improve defect detection accuracy by utilizing an attention mechanism, e.g., connected to or in the machine learning model, that increases a weight of defect-associated information (e.g., a defect-associated value included in a generated feature map). The electronic device 10 may perform a defect detection method that may adopt to, or function in, a change in a suboptimal scenario, by utilizing an attention map whose intensity (e.g., contrast) is adaptively adjusted according to the defect observation environment.

In an example, the electronic device 10 may detect a defect in an input image (e.g., an image of a product to be inspected) based on the input image and a reference image (e.g., an image of a normal product).

The electronic device 10 may detect the defect using a neural network. The neural network may be a model that is trained for a particular purpose, e.g., to infer information from or about an input to the neural network. The neural network may include nodes (artificial neurons) forming the network through trained synaptic connections. Training includes adjusting connection strengths of these synaptic connections.

Each node of the neural network may include, or be connected by, a combination of weights or biases. The neural network may include one or more layers, each including one or more nodes. The training of the neural network may be performed through supervised learning, as a non-limiting example, to infer a known result from a corresponding input by changing the weights of the nodes through iterations of training.

The machine learning model may include a deep neural network (DNN). The neural network may include a convolutional neural network (CNN), a recurrent neural network (RNN), a perceptron, a multilayer perceptron, a feed forward (FF), a radial basis network (RBF), a deep feed forward (DFF), a long short-term memory (LSTM), a gated recurrent unit (GRU), an auto encoder (AE), a variational auto encoder (VAE), a denoising auto encoder (DAE), a sparse auto encoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DCIGN), a generative adversarial network (GAN), a liquid state machine (LSM), an extreme learning machine (ELM), an echo state network (ESN), a deep residual network (DRN), a differentiable neural computer (DNC), a neural turning machine (NTM), a capsule network (CN), a Kohonen network (KN), an attention network (AN), or other non-limiting machine learning models. While embodiments refer to neural networks, this is for convenience of explanation and embodiments exist where the machine learning model is other than a neural network.

The electronic device 10 may be a personal computer (PC), a data server, or a portable device.

The portable device may be a laptop computer, a mobile phone, a smart phone, a tablet PC, a mobile internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, or a smart device, as non-limiting examples. The smart device may be a smart watch, a smart band, or a smart ring, as non-limiting examples.

The electronic device 10 may include a processor 100 and a memory 200. The electronic device may include an imaging sensor 150, e.g., a CCD or CMOS image sensor, to capture the input image.

The processor 100 may process data stored in the memory 200. The processor 100 may execute a computer-readable code (for example, software) stored in the memory 200 and instructions triggered by the processor 100. The memory 200 may also store the reference image.

The processor 100 may further execute programs, and/or may control other operations or functions of the electronic device 10, and may include any one or a combination of two or more of, for example, a central processing unit (CPU), a graphic processing unit (GPU), a neural processing unit (NPU) and tensor processing units (TPUs), but is not limited to the above-described examples.

The processor 100 may be a hardware-implemented data processing device having a circuit that is physically structured to execute desired operations. The hardware-implemented data processing apparatus may include, for example, a microprocessor, a central processing unit (CPU), a processor core, a multi-core processor, a multiprocessor, an application-specific integrated circuit (ASIC), and a field-programmable gate array (FPGA).

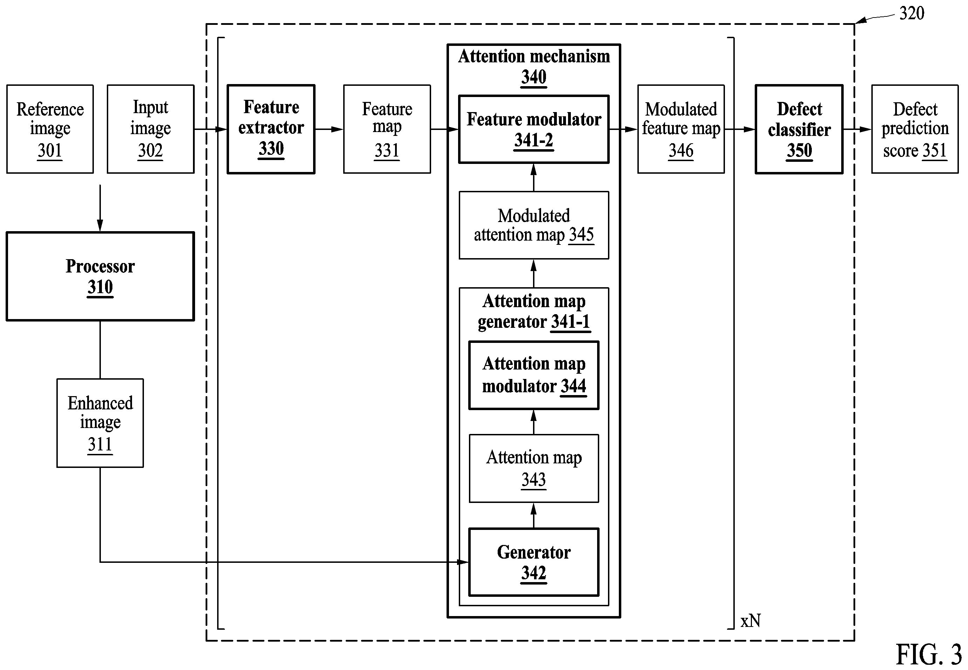

When the instructions are executed by the processor 100, the processor 100 may be configured to perform a plurality of operations. The processor 100 obtains an enhanced image in which a defective area included in an input image is emphasized, based on the input image and a reference image. The processor 100 generates a defect prediction score of the input image by inputting the reference image, the input image, and the enhanced image into a neural network. The neural network includes an attention map generator and/or an attention map modulator configured to adaptively adjust an intensity (e.g., a contrast) of an attention map generated during implementation of the neural network. Herein, illustrations, and corresponding or related discussions, of different portions of the neural network are also representative of each illustrated portion, any one or more various combinations of such illustrated portions, or the entire neural network illustration being (or otherwise being implemented by) one or more processors, or one or more processors configured to execute instructions and one or more memories storing the instructions that when executed by the one or more processor configure the one or more processors to perform the respectively described operations herein. The operations performed by the processor 100 and the configuration of the neural network will be described in greater detail below with reference to FIG. 3.

The memory 200 may be implemented as a volatile memory device or a non-volatile memory device. The memory 200 may include computer-readable instructions. The processor 100 may be configured to execute computer-readable instructions, such as those stored in the memory 200, and through execution of the computer-readable instructions, the processor 100 is configured to perform one or more, or any combination, of the operations and/or methods described herein.

The memory 200 may be a volatile or nonvolatile memory. The volatile memory device may be implemented as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory.

FIG. 3 illustrates an example of a defect inspection method based on a neural network according to one or more embodiments.

A processor (e.g., the processor 100 of FIG. 2) utilizes an enhanced image. In an example, the enhanced image may be an image in which a defective area included in a differential image is emphasized. In an example, when employed in the defect observation environment, the processor 100 may obtain a reliable defect detection result by adjusting an intensity of a signal related to the defective area found in the defect observation environment. In addition, the processor 100 may obtain relation defect detection results according to an amount of training data the neural network may have been trained on, such as in a suboptimal scenario where there was a limited number of training data. In a suboptimal scenario, the machine learning model may not have had sufficient training data on a product or type of defect.

In a non-limiting example, the processor 100 applies an attention mechanism to, or within, a trained machine learning model configured to perform a defect detection algorithm. The attention mechanism may increase a weight of defect-associated information generated by the machine learning model (e.g., a defect-associated value included in a feature map). One or more embodiments improve defect detection accuracy by using the attention mechanism. By using the attention mechanism, examples of the processor 100 may improve generalization performance even in a suboptimal scenario that has a small amount of training data, and examples of the processor 100 may also improve and maintain a predetermined detection accuracy that may have been available if more training data was accessible.

In a non-limiting example, the processor 100 utilizes an attention map that is unaffected by a change in the defect observation environment (or a change in the defect). Thus, in an example, changes in facility or environment in which the defect detection takes place, (e.g., noise, distortion, interference, or other external factors) may not affect the attention map or defect detection method. The processor 100 may provide a defect detection method resistant to potential negative effects from a change in training model of the neural network, such as in an where a neural network model has low training data by utilizing an attention map whose intensity (e.g., contrast) is adaptively adjusted according to the defect observation environment.

Referring to FIG. 3, the processor 100 may utilize a processor 310 implement (e.g., execute) a neural network 320. Operations of processor 310 may be performed by processor 100, or processor 310 may be separate from the processor 100 in the electronic device 10. For example, the processor 310 may be a digital signal processor, though examples are not limited thereto.

The processor 310 may receive a reference image 301 (e.g., an image of a normal product) and an input image 302 (e.g., an image of a product to be inspected) and output an enhanced image 311 in which a defective area is emphasized. The processor 310 may be configured to perform signal processing. The processor 310 may obtain a differential image based on the reference image 301 and the input image 302. The processor 310 may output the enhanced image 311 in which an intensity of a defective area included in the differential image is adjusted.

The neural network 320 is configured to output a defect prediction score 351 to determine whether the input image 302 includes a defect (e.g., whether the product to be inspected included in the input image 302 is defective), based on the reference image 301, the input image 302, and the enhanced image 311 provided to the neural network 320. Portions of the neural network 320 may include a feature extractor 330, an attention mechanism 340, and a defect classifier 350.

The feature extractor 330 receives the reference image 301 and the input image 302 and extract a feature map 331.

The attention mechanism 340 may be trained to increase weights of defect-associated values included in the feature map 331. The attention mechanism 340 may be intended to improve the quality of features (e.g., the feature map 331). The attention mechanism 340 may include an attention map generator 341-1 and a feature modulator 341-2.

The attention map generator 341-1 may receive the enhanced image 311 and output a modulated attention map 345. The attention map generator 341-1 may generate an attention map whose intensity (e.g., contrast) is adaptively adjusted (e.g., the modulated attention map 345) according to a strength of a neural network's available training data. The attention map generator 341-1 may generate an attention map (e.g., the modulated attention map 345) immune to a change in the defect observation environment (or a change in the defect). The attention map generator 341-1 may include a generator 342 and an attention map modulator 344.

The generator 342 receives the enhanced image 311 and output an attention map 343. The attention map modulator 344 receives the attention map 343 and output the modulated attention map 345. The attention map modulator 344 adaptively adjusts the intensity (e.g., contrast) of the attention map 343 according to changes within or other factors that may arise in the defect observation environment. In an example, the modulated attention map 345 may be derived through Equation 1.

Equation 1:

$$A_{modulated} = \frac{A - u}{\sigma}$$

In Equation 1, A denotes the attention map 343, $A_{modulated}$ denotes the modulated attention map 345, and $\sigma$ and u denote parameters for adjusting the intensity (e.g., contrast) of the attention map 343. The parameters $\sigma$ and u may be trained to contribute to improving detection accuracy. The number of modulated attention maps 345 is not limited to "1" and may vary depending on the configuration of the feature modulator 341-2.

The feature modulator 341-2 may receive the modulated attention map 345 and the feature map 331 and output the modulated feature map 346. The feature modulator 341-2 may obtain the modulated feature map 346 as a result of performing an elementwise operation on at least a portion of the feature map 331 and the modulated attention map 345. The modulated feature map 346 may be derived through Equation 2.

Equation 2:

$$y = A_w x + A_b$$

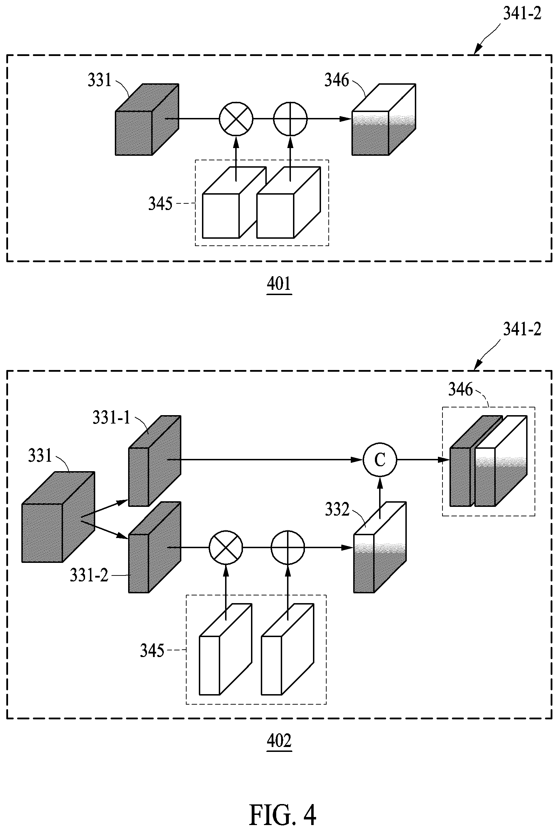

In Equation 2, y denotes the modulated feature map 346, $A_w$ and $A_b$ denote modulated attention maps 345, and x denotes the feature map 331. The configuration of the feature modulator 341-2 will be described in greater detail below with reference to FIG. 4.

The feature extractor 330 and the attention mechanism 340 may be connected in series, and the feature extractor 330 and the attention mechanism 340 connected in series may be repeated a plurality of times. The attention mechanism 340 may be designed in a plug-in form, and may be compatible with a neural network model not shown in FIG. 3.

The defect classifier 350 may receive the modulated feature map 346 and output a defect prediction score indicating whether the input image 302 includes a defect (e.g., whether the product to be inspected included in the input image is defective).

The electronic device 10 may be applied in various manners in an industrial environment for producing products (e.g., elements, components, and finished products) using an image (or video)-based defect inspection algorithm. In a non-limiting example, the electronic device 10 may be applied to a semiconductor process. The electronic device 10 may monitor the production process and for facility abnormalities in real time based on an input image (or an input video) and predict a product yield rate. The electronic device 10 may be used in an industrial environment for producing products and also in the field of automatically detecting an abnormal state found in a security camera image.

FIG. 4 illustrates examples of a configuration and an operation of a feature modulator shown in FIG. 3 according to one or more embodiments.

Referring to FIG. 4, examples of the configuration and the operation of the feature modulator 341-2 are shown. Two examples, 401 and 402 are illustrated. The feature modulator 341-2 may perform an elementwise operation on at least a portion of the feature map 331 and the modulated attention map 345.

In example 401, the feature modulator 341-2 may be configured to output the modulated feature map 346 by applying the modulated attention map 345 to the feature map 331. In example 402, the feature modulator 341-2 may be configured to output the modulated feature map 346 by applying the modulated attention map 345 to a portion 331-2 of the feature map 331 and concatenating a result (e.g., a modulated feature map 332) of applying the modulated attention map and a remaining portion 331-1 of the feature map 331. By utilizing the modulated feature map 346 including the modulated feature map 332 and the remaining portion 331-1 of the feature map 331 including unique information of the input image, an electronic device (e.g., the electronic device 10 of FIG. 2) may provide an improved defect detection technique.

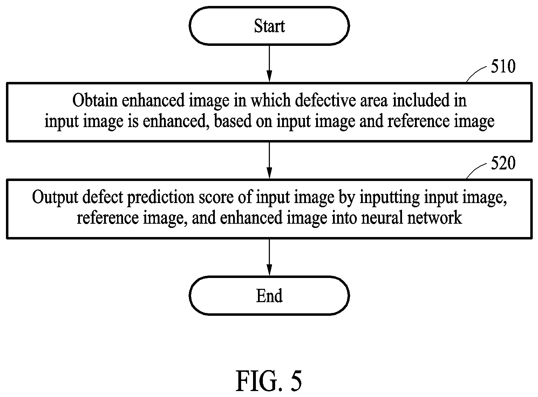

FIG. 5 illustrates an example of a defect inspection method according to one or more embodiments.

Referring to FIG. 5, operations 510 and 520 may be performed sequentially. However, examples are not limited thereto. For example, two or more operations may be performed in parallel.

In operation 510, a processor (e.g., the processor 100 of FIG. 2) may obtain an enhanced image (e.g., the enhanced image 311 of FIG. 3) in which a defective area included in an input image (e.g., the input image 302 of FIG. 2) is emphasized, based on the input image 302 and a reference image (e.g., the reference image 301 of FIG. 3). The enhanced image 311 may be obtained from a processor (e.g., the processor 310 of FIG. 3) configured to receive the input image 302 and the reference image 301 and output an image in which a defective area is emphasized. The processor 310 may obtain a differential image based on the input image 302 and the reference image 301 and output the enhanced image 311 by adjusting an intensity of a defective area included in the differential image.

In operation 520, the processor 100 may output a defect prediction score (e.g., the defect prediction score 351 of FIG. 3) of the input image by inputting the reference image 301, the input image 302, and the enhanced image 311 into a neural network (e.g., the neural network 320 of FIG. 3). The neural network 302 may include an attention map modulator (e.g., the attention map modulator 344 of FIG. 3) configured to adaptively adjust an intensity (e.g., a contrast) of an attention map.

The neural network 320 may include a feature extractor (e.g., the feature extractor 330) and be configured to receive the reference image 301 and the input image 302 and extract a feature map (e.g., the feature map 331 of FIG. 3). The neural network 320 may also include an attention mechanism (e.g., the attention mechanism 340 of FIG. 3) configured to receive the feature map 331 and the enhanced image 311 and to output a modulated feature map (e.g., the modulated feature map 346 of FIG. 3).

In a non-limiting example, the attention mechanism 340 may be trained to increase weights of defect-associated values included in the feature map 331. The attention mechanism 340 may include an attention map generator (e.g., the attention map generator 341-1 of FIG. 3) configured to receive the enhanced image 311 and to output a modulated attention map (e.g., the modulated attention map 345 of FIG. 3). The attention mechanism 340 may include a feature modulator (e.g., the feature modulator 341-2 of FIG. 3) configured to receive the modulated attention map 345 and the feature map 331 and output the modulated feature map 346.

In an example, the attention map generator 341-1 may include a generator (e.g., the generator 342 of FIG. 3) configured to receive the enhanced image 311 and to output an attention map 343. The attention map generator 341-1 may also include an attention map modulator (e.g., the attention map modulator 344) configured to receive the attention map 343 and to output the modulated attention map 345.

In an example, the feature modulator 341-2 may output the modulated feature map 346 by applying the modulated attention map 345 to the feature map 331. In another example, the feature modulator 341-2 may output the modulated feature map 346 by applying the modulated attention map 345 to a portion of the feature map (e.g., the portion 331-2 of the feature map of FIG. 4) and concatenating a result (e.g., the modulated feature map 332 of FIG. 4) of applying the modulated attention map and a remaining portion of the feature map (e.g., the remaining portion 331-1 of the feature map of FIG. 4). In a non-limiting example, the feature modulator 341-2 may perform an elementwise operation on at least a portion of the feature map 331 and the modulated attention map 345.

The neural network 320 may further include a defect classifier (e.g., the defect classifier 350 in FIG. 3) configured to receive the modulated feature map 346 and output a defect prediction score of the input image 302.

The electronic device, processors, memories, neural networks, processor 100, memory 200, electronic device 10, and processor 310, as well as other components described and disclosed herein and described with respect to FIGS. 1-5 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-5 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the appended claims, i.e., all variations within the scope of the claims are to be construed as being included in the disclosure.

## Claims

1. A processor-implemented method, the method comprising:

   generating an enhanced image (311) based on an input image (302) and a reference image (301), in which a defective area is emphasized;
   generating a defect prediction score (351) of the input image (302) through the use of a neural network that is provided with the reference image (301), the input image (302), and the enhanced image (311),
   wherein the neural network comprises:

   a feature extractor (330) configured to receive the reference image (301) and the input image (302) and to extract a feature map (331); **characterized in that** the neural network further comprises
   an attention mechanism (340) configured to receive the feature map (331) and the enhanced image (311) and to output a modulated feature map (346), said attention mechanism (340) comprising:

   a generator (342) configured to receive the enhanced image (311) and to output an attention map (343);
   an attention map modulator (344) configured to adaptively adjust an intensity of the attention map (343) generated during the use of the neural network; and
   a feature modulator (341-2) configured to receive the modulated attention map (345) and the feature map (331) and to output the modulated feature map (346).

2. The method of claim 1, wherein the generating of the enhanced image further (311) comprises:

   obtaining a differential image based on the input image (302) and the reference image (301), and outputting the enhanced image (311) by adjusting an intensity of a defective area included in the differential image.

3. The method of any one of the previous claims, wherein the attention mechanism (340) operates as reflecting that the attention mechanism (340) was trained to increase weights of defect-associated values included in the feature map (331).

4. The method of any one of the previous claims, wherein the attention mechanism (340) comprises: an attention map generator (341-1) configured to receive the enhanced image (311) and to output the modulated attention map (346).

5. The method of claim 4, wherein

   the attention map modulator (344) is further configured to receive the attention map (343) and to output the modulated attention map (345); and
   wherein the modulated attention map (345) is obtained by adaptively adjusting an intensity of the attention map (343).

6. The method of claim 4 or 5, wherein the feature modulator (341-2) is configured to output the modulated feature map (346) by applying the modulated attention map (345) to the feature map (331).

7. The method of claim 4 or 5, wherein the feature modulator (341-2) is configured to:

   apply the modulated attention map (345) to a portion of the feature map (331), and
   output the modulated feature map (346) by concatenating a result of applying the modulated attention map (345) and a remaining portion of the feature map (331) excluding the portion.

8. An apparatus (10), comprising:

   a processor (100) configured to execute a plurality of instructions which cause the apparatus to carry out the steps of the method according to any one of the previous claims; and
   a memory (200) storing the plurality of instructions.

9. The apparatus of claim 8, wherein the input is generated according to any one of claims 4-7, wherein the feature modulator is configured to perform an elementwise operation on at least a portion of the feature map and the modulated attention map.

10. The apparatus of any of claim 8 or 9, wherein the neural network further comprises:
    a defect classifier configured to receive the modulated feature map and output the defect prediction score of the input image.

**Patentansprüche**

1. Prozessorimplementiertes Verfahren, wobei das Verfahren Folgendes umfasst:

   Erzeugen eines verbesserten Bildes (311), in dem ein fehlerhafter Bereich hervorgehoben ist, auf der Basis eines Eingangsbildes (302) und eines Referenzbildes (301);
   Erzeugen einer Fehlervorhersagebewertung (351) des Eingangsbildes (302) unter Verwendung eines neuronalen Netzwerks, das mit dem Referenzbild (301), dem Eingangsbild (302) und dem verbesserten Bild (311) versorgt wird,
   wobei das neuronale Netzwerk Folgendes umfasst:
   einen Merkmalsextraktor (330), der konfiguriert ist, um das Referenzbild (301) und das Eingangsbild (302) zu empfangen und eine Merkmalskarte (331) zu extrahieren;
   **dadurch gekennzeichnet, dass** das neuronale Netzwerk ferner einen Aufmerksamkeitsmechanismus (340) umfasst, der konfiguriert ist, um die Merkmalskarte (331) und das verbesserte Bild (311) zu empfangen und eine modulierte Merkmalskarte (346) auszugeben, wobei der Aufmerksamkeitsmechanismus (340) Folgendes umfasst:

   einen Generator (342), der konfiguriert ist, um das verbesserte Bild (311) zu empfangen und eine Aufmerksamkeitskarte (343) auszugeben;
   einen Aufmerksamkeitskartenmodulator (344), der konfiguriert ist, um eine Intensität der während der Verwendung des neuronalen Netzwerks erzeugten Aufmerksamkeitskarte (343) adaptiv anzupassen; und
   einen Merkmalsmodulator (341-2), der konfiguriert ist, um die modulierte Aufmerksamkeitskarte (345) und die Merkmalskarte (331) zu empfangen und die modulierte Merkmalskarte (346) auszugeben.

2. Verfahren nach Anspruch 1, wobei das Erzeugen des verbesserten Bildes (311) ferner Folgendes umfasst:

   Erhalten eines Differenzialbildes auf der Basis des Eingangsbildes (302) und des Referenzbildes (301), und
   Ausgeben des verbesserten Bildes (311) durch Anpassen einer Intensität eines in dem Differenzialbild enthaltenen fehlerhaften Bereichs.

3. Verfahren nach einem der vorhergehenden Ansprüche, wobei der Aufmerksamkeitsmechanismus (340) so arbeitet, dass er widerspiegelt, dass der Aufmerksamkeitsmechanismus (340) darauf trainiert wurde, Gewichtungen von in der Merkmalskarte (331) enthaltenen, mit Fehlern verknüpften Werten zu erhöhen.

4. Verfahren nach einem der vorhergehenden Ansprüche, wobei der Aufmerksamkeitsmechanismus (340) Folgendes umfasst:
einen Aufmerksamkeitskartengenerator (341-1), der konfiguriert ist, um das verbesserte Bild (311) zu empfangen und die modulierte Aufmerksamkeitskarte (346) auszugeben.

5. Verfahren nach Anspruch 4, wobei

der Aufmerksamkeitskartenmodulator (344) ferner konfiguriert ist, um die Aufmerksamkeitskarte (343) zu empfangen und die modulierte Aufmerksamkeitskarte (345) auszugeben; und die modulierte Aufmerksamkeitskarte (345) erhalten wird, indem eine Intensität der Aufmerksamkeitskarte (343) adaptiv angepasst wird.

6. Verfahren nach Anspruch 4 oder 5, wobei der Merkmalsmodulator (341-2) konfiguriert ist, um die modulierte Merkmalskarte (346) auszugeben, indem die modulierte Aufmerksamkeitskarte (345) auf die Merkmalskarte (331) angewendet wird.

7. Verfahren nach Anspruch 4 oder 5, wobei der Merkmalsmodulator (341-2) zu Folgendem konfiguriert ist:

Anlegen der modulierten Aufmerksamkeitskarte (345) an einen Abschnitt der Merkmalskarte (331) und
Ausgeben der modulierten Merkmalskarte (346) durch Verketten eines Ergebnisses des Anlegens der modulierten Aufmerksamkeitskarte (345) und eines verbleibenden Abschnitts der Merkmalskarte (331) ohne den Abschnitt.

8. Vorrichtung (10), die Folgendes umfasst:

einen Prozessor (100), der konfiguriert ist, um eine Vielzahl von Anweisungen auszuführen, die die Vorrichtung veranlassen, die Schritte des Verfahrens nach einem der vorhergehenden Ansprüche auszuführen; und
einen Speicher (200), in dem die Vielzahl von Anweisungen gespeichert ist.

9. Vorrichtung nach Anspruch 8, wobei die Eingabe gemäß einem der Ansprüche 4 bis 7 erzeugt wird, wobei der Merkmalsmodulator konfiguriert ist, um eine elementweise Operation an zumindest einem Abschnitt der Merkmalskarte und der modulierten Aufmerksamkeitskarte durchzuführen.

10. Vorrichtung nach einem der Ansprüche 8 oder 9, wobei das neuronale Netzwerk ferner Folgendes umfasst:
einen Fehlerklassifizierer, der konfiguriert ist, um die modulierte Merkmalskarte zu empfangen und die Fehlervorhersagebewertung des Eingangsbildes auszugeben.

## Revendications

1. Procédé mis en œuvre par un processeur et comprenant les étapes consistant à :

générer, compte tenu d'une image d'entrée (302) et d'une image de référence (301), une image améliorée (311) dans laquelle une zone défectueuse est mise en évidence,
générer un score de prédiction de défaut (351) de l'image d'entrée (302) au moyen d'un réseau neuronal auquel est fourni l'image de référence (301), l'image d'entrée (302) et l'image améliorée (311) ;
ledit réseau neuronal comprenant :
un extracteur de caractéristiques (330) configuré pour recevoir l'image de référence (301) et l'image d'entrée (302) et pour extraire une carte de caractéristiques (331) ;
**caractérisé en ce que** le réseau neuronal comprend en outre un mécanisme d' attention (340) configuré pour recevoir la carte de caractéristiques (331) et l'image améliorée (311) et pour produire une carte de caractéristiques modulée (346), ledit mécanisme d'attention (340) comprenant :

un générateur (342) configuré pour recevoir l'image améliorée (311) et pour produire une carte d'attention (343),
un modulateur de carte d'attention (344) configuré pour ajuster de manière adaptative l'intensité de la carte d'attention (343) générée pendant l'utilisation du réseau neuronal, et
un modulateur de caractéristiques (341-2) configuré pour recevoir la carte d'attention modulée (345) et la carte de caractéristiques (331) et pour produire la carte de caractéristiques modulée (346).

2. Procédé selon la revendication 1, dans lequel la génération de l'image améliorée (311) comprend en outre :

l'obtention d'une image différentielle fondée sur l'image d'entrée (302) et l'image de référence (301), et
la production de l'image améliorée (311) par ajustement de l'intensité d'une zone défectueuse présente dans l'image différentielle.

3. Procédé selon l'une quelconque des revendications précédentes, dans lequel le mécanisme d'attention (340) fonctionne en reflétant le fait que le mécanisme d'attention (340) a été entraîné pour augmenter le poids de valeurs associées aux défauts présentes dans la carte de caractéristiques (331).

4. Procédé selon l'une quelconque des revendications précédentes, dans lequel le mécanisme d'attention (340) comprend :
un générateur de carte d'attention (341-1) configuré pour recevoir l'image améliorée (311) et pour produire la carte d'attention modulée (346).

5. Procédé selon la revendication 4, dans lequel

le modulateur de carte d'attention (344) est en outre configuré pour recevoir la carte d'attention (343) et pour produire la carte d'attention modulée (345), et
la carte d'attention modulée (345) est obtenue par ajustement adaptatif de l'intensité de la carte d'attention (343).

6. Procédé selon la revendication 4 ou 5, dans lequel le modulateur de caractéristiques (341-2) est configuré pour produire la carte de caractéristiques modulée (346) en appliquant la carte d'attention modulée (345) à la carte de caractéristiques (331).

7. Procédé selon la revendication 4 ou 5, dans lequel le modulateur de caractéristiques (341-2) est configuré pour :

appliquer la carte d'attention modulée (345) à une partie de la carte de caractéristiques (331), et
produire la carte de caractéristiques modulée (346) en concaténant le résultat de l'application de la carte d'attention modulée (345) et une partie restante de la carte de caractéristiques (331) autre que ladite partie.

8. Appareil (10) comprenant :

un processeur (100) configuré pour exécuter une pluralité d'instructions amenant l'appareil à exécuter les étapes du procédé selon l'une quelconque des revendications précédentes, et
une mémoire (200) dans laquelle est stockée la pluralité d'instructions.

9. Appareil selon la revendication 8, dans lequel l'entrée est générée selon l'une quelconque des revendications 4 à 7, et dans lequel le modulateur de caractéristiques est configuré pour effectuer une opération élément par élément sur au moins une partie de la carte de caractéristiques et de la carte d'attention modulée.

10. Appareil selon l'une quelconque des revendications 8 et 9, dans lequel le réseau neuronal comprend en outre :
un classificateur de défauts configuré pour recevoir la carte de caractéristiques modulée et produire le score de prédiction de défauts de l'image d'entrée.

EP 4 365 834 B1

Input image → Defect enhancement 101 → Feature estimation 102 → Defect decision 103 → Defect

REF  DEF

DIF

FIG. 1A

REF  DEF

DIF

Neural Block n$^{th}$ → Defect

x N

FIG. 1B

FIG. 2

FIG. 3

FIG. 4

```
                          ⟨  Start  ⟩
                              │
                              ▼                              ╱─ 510
   ┌─────────────────────────────────────────────────────────────┐
   │       Obtain enhanced image in which defective area included in │
   │     input image is enhanced, based on input image and reference image │
   └─────────────────────────────────────────────────────────────┘
                              │
                              ▼                              ╱─ 520
   ┌─────────────────────────────────────────────────────────────┐
   │  Output defect prediction score of input image by inputting input image, │
   │      reference image, and enhanced image into neural network  │
   └─────────────────────────────────────────────────────────────┘
                              │
                              ▼
                          ⟨  End  ⟩
```

FIG. 5

**EP 4 365 834 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113034476 A

**Non-patent literature cited in the description**

- **ZHENG YE et al.** *Defect detection on new samples with Siamese detect-aware attention network*, 11 June 2022